# EUROPÄISCHE PATENTSCHRIFT

(11) **EP 2 537 023 B1**
(45) Veröffentlichungstag und Bekanntmachung des Hinweises auf die Patenterteilung: **14.12.2016**
(21) Anmeldenummer: 11720976.7
(22) Anmeldetag: 10.02.2011
(51) Int. Cl.: G01N 25/48, G01N 5/04

(54) **TEMPERIERVORRICHTUNG FÜR THERMOANALYTISCHE UNTERSUCHUNGEN**
TEMPERATURE-CONTROL DEVICE FOR THERMOANALYTICAL ANALYSES
DISPOSITIF POUR EFFECTUER DES ÉTUDES THERMOANALYTIQUES CONTRÔLÉ EN TEMPERATURE

(30) Priorität: 18.02.2010 DE 102010008486
(43) Veröffentlichungstag der Anmeldung: 26.12.2012
(73) Patentinhaber: Netzsch Gerätebau GmbH, 95100 Selb (DE)
(72) Erfinder: BLUMM, Jürgen, 95100 Selb (DE); DENNER, Thomas, 95100 Selb (DE)
(86) Internationale Anmeldenummer: PCT/DE2011/000132
(87) Internationale Veröffentlichungsnummer: WO 2011/100952

(56) Entgegenhaltungen:
- EP-A2- 0 884 585
- GB-A- 2 204 953
- US-A- 4 031 740
- US-A- 5 439 291
- US-A1- 2002 024 349
- US-A1- 2009 052 494

## Beschreibung

Die vorliegende Erfindung betrifft eine Temperiervorrichtung für thermo-analytische Untersuchungen, mit einem Gehäuse, wenigstens einem Heizelement und wenigstens einer in dem Gehäuse angeordneten Schutzhülle, die mit einer Gasversorgung verbindbar ist.

Derartige Temperiervorrichtungen sind aus dem Stand der Technik bekannt und werden beispielsweise in Geräten zur thermischen Analyse, wie z.B. einem dynamischen Differenzkalorimeter, Thermowaagen oder in Geräten zur simultanen thermischen Analyse verwendet. Die genannten Geräte zur thermischen Analyse werden zur Materialcharakterisierung, d.h. unter anderem zur Analyse von polymeren und pharmazeutischen Werkstoffen oder Textilien, verwendet. Mit den oben genannten Analysevorrichtungen werden die zu untersuchenden Materialproben in einer Temperiereinrichtung erwärmt oder abgekühlt, wobei klassische Messgrößen beispielsweise das Ausdehnungsverhalten, Gewichtsveränderungen, Phasenumwandlungstemperaturen oder Enthalpieänderungen sind. Derzeit werden in den voranstehend beschriebenen thermischen Analysevorrichtungen Rohröfen als Temperiereinrichtung eingesetzt, die mit als Heizelemente wirkenden Widerstandsheizern ausgestattet sind, wobei die Heizelemente außerhalb einer Schutzhülle bzw. des Schutzrohres angeordnet sind. Die aus dem Stand der Technik bekannten Rohröfen stoßen jedoch bei solchen Untersuchungen an ihre Grenzen, die eine schnelle Erwärmung der zu untersuchenden Materialprobe bzw. der die Materialprobe umgebenden Atmosphäre voraussetzen. Mit anderen Worten können diese Öfen Heizraten von mehreren 100 K/min aufgrund ihrer thermischen Masse nicht realisieren.

Beispielsweise ist in der Offenlegungsschrift GB 2 204 953 A eine thermische Analysevorrichtung offenbart, welche einen Heizblock mit mindestens vier voneinander getrennten Kammern aufweist, die offene Oberseiten und gelochte Unterseiten haben. Ein Heizelement umgibt den Heizblock, wobei Heizblock und Heizelement von einem Wärmeschild umgeben sind. Nachteilig ist jedoch, dass die Aufheizung der Probe nur indirekt über den Heizblock erfolgen kann. Zudem bildet sich um die Proben herum auch nur ein nachteilig inhomogenes Temperaturfeld aus, da die Proben nur in einem äußeren Bereich von dem Heizblock umgeben sind.

Die Patentschrift US 5,439,291 offenbart eine Temperiervorrichtung für thermoanalytische Untersuchungen mit einem Gehäuse, indem sich ein Probenofen mit einer Plafiineinfassung befindet, in dem ein Heizelement und ein Sensor integriert sind und ein Heizraum für eine Probenpfanne vorgesehen ist. Der Probenofen wird mit Hilfe des Heizelementes erwärmt und die Wärmeenergie durch den Platinkörper auf die Probenpfanne beziehungsweise Probe übertragen.

Dementsprechend ist es eine Aufgabe der vorliegenden Erfindung, eine Temperiervorrichtung der eingangs bezeichneten Art bereitzustellen, die bei Vermeidung von Wärmeverlusten schnelle Temperaturerhöhungen ermöglicht und gleichzeitig ein homogenes Temperaturfeld innerhalb der Temperiervorrichtung erzeugt.

Diese Aufgabe wird mit einer Temperiervorrichtung der eingangs bezeichneten Art gelöst, bei der das Heizelement zumindest teilweise innerhalb der Schutzhülle angeordnet ist.

Erfindungsgemäß ist - im Gegensatz zum Stand der Technik - das Heizelement innerhalb der Schutzhülle bzw. des Schutzrohres angeordnet, um eine zu untersuchende Materialprobe bzw. die Atmosphäre innerhalb der Schutzhülle schneller erwärmen zu können. Vorzugsweise wird das Heizelement innerhalb der Schutzhülle direkt um eine zu untersuchende Materialprobe bzw. eine Sensoranordnung angeordnet. Neben sehr schnellen Messungen bis zu einer Temperatur von 1250°C können mit der erfindungsgemäßen Temperiereinrichtung auch sehr hohe Heizraten mit über 1000 K/min realisiert werden.

Ferner können mit der erfindungsgemäßen Temperiervorrichtung herkömmliche Probenträger und Sensorenanordnungen verwendet werden. Es sind demnach keine speziellen für die Temperiervorrichtung konstruierten Probenaufnahmen oder Sensoranordnungen notwendig.

Gemäß einer bevorzugten Ausführungsform der Erfindung ist vorgesehen, dass die Schutzhülle ein aus Keramik oder Glas hergestelltes Schutzrohr ist.

In diesem Zusammenhang sieht eine weitere bevorzugte Ausführungsform der Erfindung vor, dass das Schutzrohr an seiner dem Gehäuse zugewandten Außenfläche mit einer reflektierenden, metallischen Beschichtung versehen ist. Durch die reflektierende, metallische Beschichtung wird die Wärmestrahlung mehrfach reflektiert, wodurch das Temperaturfeld innerhalb des Heizelements homogenisiert wird. Dadurch kann eine zu untersuchende Probe gleichmäßig erhitzt werden. Ferner können durch die Beschichtung Wärmestrahlungsverluste nach außen in Richtung des Gehäuses minimiert werden, wodurch auch eine übermäßige Erwärmung des Gehäuses bzw. des Ofenmantels vermindert wird. Dementsprechend bleibt die durch das Heizelement erzeugte Heizleistung größtenteils innerhalb des aus Glas oder Keramik hergestellten Schutzrohres und entsprechend auch im Bereich der zu untersuchenden Probe.

Erfindungsgemäß ist das Heizelement zumindest teilweise aus Metall oder Keramik hergestellt. Ein aus Metall oder Keramik hergestelltes Heizelement weist bei gleichzeitiger niedriger Wärmekapazität zumeist eine sehr hohe Temperaturwechselbeständigkeit auf. Mit anderen Worten können mit einem metallischen oder keramischen Heizelement Heizvorgänge mit hohen Temperaturen und auch Abkühlvorgänge wechselweise in kurzen Abständen hintereinander ausgeführt werden, ohne dass das Heizelement beispielsweise aufgrund von Spannungen in dem Material beeinträchtigt oder gar beschädigt wird.

Um den Bediener einer erfindungsgemäßen Temperiervorrichtung und auch die reflektierende metallische Schutzrohrbeschichtung zu schützen, ist gemäß einer Weiterbildung der Erfindung vorgesehen, dass das Schutzrohr mittels einer Luftkühlung kühlbar ist, wobei dem Schutzrohr fortlaufend Luft zugeführt wird. Dadurch werden relativ niedrige Temperaturen des Schutzrohres und auch des Gehäuses erreicht, wobei gerade eine niedrige Temperatur des Gehäuses die Verletzungsgefahr eines Bedieners durch Verbrennungen an dem Gehäuse deutlich reduziert.

Erfindungsgemäß kann die Temperiervorrichtung Heizraten in einem Bereich von 0 K/min bis über 1000 K/min erzeugen.

Um eine Wärmeabstrahlung in Richtung der Analysevorrichtung, mit der die Temperiervorrichtung verbunden ist, zu verhindern, sieht eine Weiterbildung der Erfindung vor, dass die Temperiervorrichtung wenigstens ein zumindest teilweise in der Schutzhülle angeordnetes Strahlenschutzschild aufweist. Vorzugsweise wird das Strahlenschutzschild in der Schutzhülle in einem Bereich unterhalb des Heizelements angeordnet.

Zur Positionierung einer zu untersuchenden Materialprobe in der Temperiervorrichtung weist die Temperiervorrichtung erfindungsgemäß wenigstens einen zumindest teilweise in der Schutzhülle angeordneten Probenträger auf. Der Probenträger wird bevorzugt derart in der Schutzhülle positioniert, dass die zu untersuchende Materialprobe von dem Heizelement in der Schutzhülle umgeben wird, um die Materialprobe gleichmäßig erhitzen zu können, d.h. die Materialprobe mit einem homogenen Temperaturfeld zu umgeben. Ferner können durch die Anordnung des Heizelements direkt um den Probenträger herum Temperaturen von bis zu 1250°C für entsprechende Untersuchungen einer Materialprobe sehr schnell erreicht werden.

Gemäß einer bevorzugten Ausführungsform der Erfindung kann die Temperiervorrichtung wenigstens eine zumindest teilweise in der Schutzhülle angeordnete Sensoranordnung aufweisen. Durch die erfindungsgemäße Anordnung des Heizelements in der Schutzhülle, wird die Sensoranordnung direkt von dem Heizelement umgeben, wodurch eine homogene Erwärmung im Bereich der Sensoranordnung und des Probenträgers innerhalb der Temperiervorrichtung gewährleistet wird.

Ferner betrifft die vorliegende Erfindung eine Analysevorrichtung mit einer Temperiervorrichtung der voranstehend beschriebenen Art.

Gemäß einer bevorzugten Ausführungsform der Erfindung ist die Temperiervorrichtung abnehmbar oder austauschbar an der Analysevorrichtung angebracht. Mit anderen Worten bildet die Temperiervorrichtung eine in sich abgeschlossene Einheit einer Analysevorrichtung, wodurch erreicht wird, dass die Temperiervorrichtung mit verschiedenen Analysevorrichtungen verbunden werden kann.

Einer bevorzugten Ausführungsform nach ist die Analysevorrichtung vakuumdicht, wodurch Untersuchungen einer Materialprobe unter Vakuumbedingungen ermöglich werden.

Erfindungsgemäß kann die Analysevorrichtung unter anderem eine Analysevorrichtung zur Gasanalyse, eine Thermowaage oder eine thermische Analysevorrichtung sein.

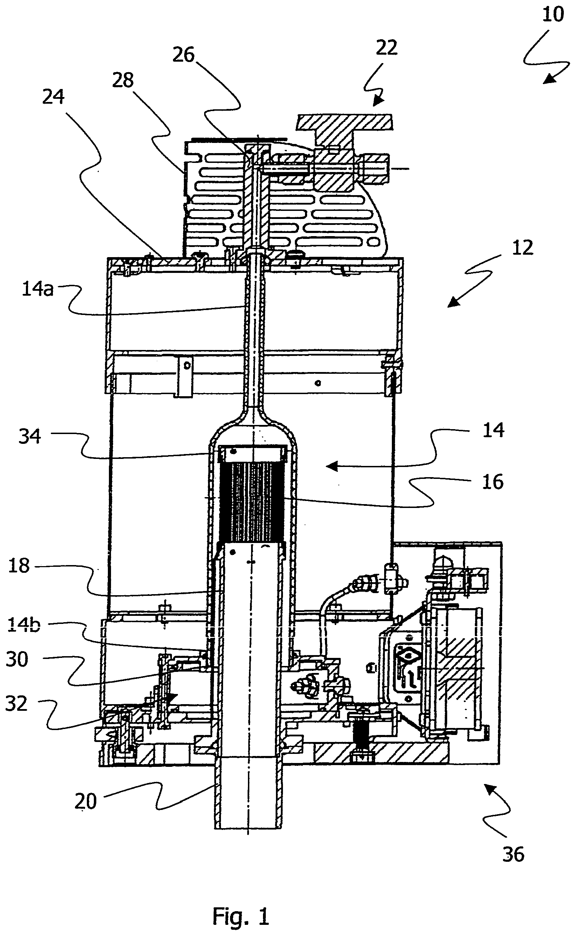

Die Erfindung wird im Folgenden beispielhaft anhand der beiliegenden Figur 1 erläutert. Es stellen dar:
- Figur 1: eine Schnittansicht der erfindungsgemäßen Temperiervorrichtung, und
- Figur 2: eine perspektivische Ansicht der erfindungsgemäßen Temperiervorrichtung.

Figur 1 zeigt eine Schnittansicht der erfindungsgemäßen Temperiervorrichtung, die allgemein mit 10 bezeichnet ist.

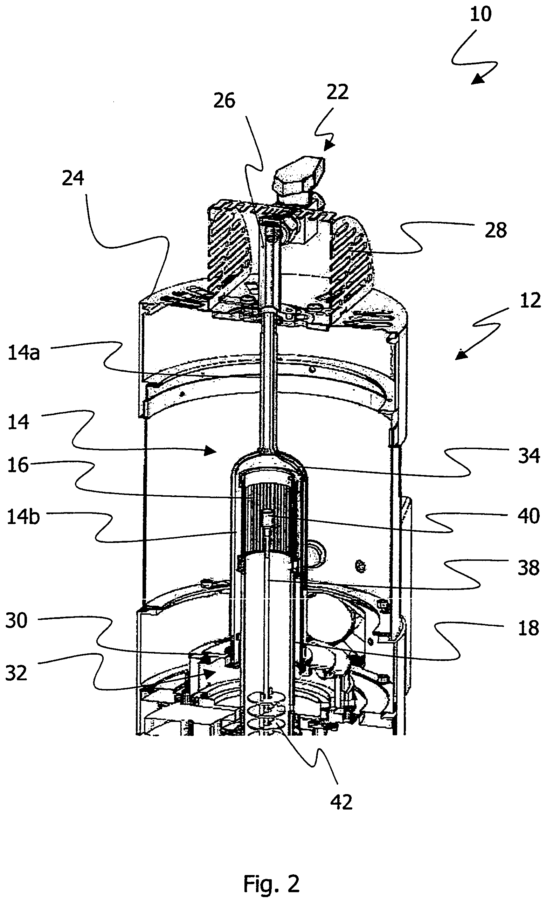

Die Temperiervorrichtung 10 weist ein Gehäuse 12 auf, in dem die Schutzhülle 14 angeordnet ist. In der Schutzhülle 14 ist ein im Wesentlichen rohrförmiges Heizelement 16 aus Metall oder Keramik angeordnet. Das Heizelement 16 kann sich auch aus einer Mehrzahl von einzelnen Heizkörpern zusammensetzen. Das Heizelement 16 wird innerhalb der Schutzhülle 14 bzw. des Schutzrohres über einen Rohrabschnitt 18 in einer vorbestimmten Position innerhalb des Schutzrohres 14 positioniert. Die Position des Heizelements 16 ist derart gewählt, dass es im an einer Analysevorrichtung (nicht gezeigt) angebrachten Zustand der Temperiervorrichtung 10 einen hier nicht gezeigten Probenträger mit einer darauf befindlichen Materialprobe oder eine hier nicht gezeigte Sensoranordnung (Fig. 2) direkt umgibt und eine homogene Erwärmung mit sehr hohen Heizraten von über 1000 K/min ermöglicht.

Der Rohrabschnitt 18 der Temperiervorrichtung 10 ist gemäß Figur 1 nach unten geöffnet, damit dann, wenn die Temperiervorrichtung 10 an einer thermischen Analysevorrichtung (nicht gezeigt) angebracht ist, ein Probenträger oder eine Sensoranordnung (Fig. 2) über den Rohrabschnitt 18 in das Schutzrohr 14 und in das Heizelement 16 eingeschoben werden können.

An den Rohrabschnitt 18 ist ferner ein Anschlussrohr 20 angeschlossen, mit dem die Temperiervorrichtung 10 mit einer Analysevorrichtung verbunden werden kann. Mit anderen Worten können an dem Anschlussrohr 20 Gas- oder Druckquellen angeschlossen werden, um in dem Schutzrohr 14 vorbestimmte atmosphärische Bedingungen oder ein Vakuum zu erzeugen. Wird ein bestimmtes Gas für die Untersuchung einer Materialprobe verwendet, kann das Gas anschließend über ein Gasauslassventil 22 im oberen Bereich des Gehäuses 12 der Temperiervorrichtung 10 abgeführt werden.

In diesem Zusammenhang erkennt man in Fig. 1, dass das Schutzrohr 14 in einem Bereich oberhalb des Heizelements 16 glockenförmig verläuft und dadurch seinen Durchmesser verkleinert. Mit anderen Worten geht das Schutzrohr 14 oberhalb des Heizelements 16 in einen Abschnitt 14a mit einem sehr viel kleineren Durchmesser über. Mit dem den kleineren Durchmesser aufweisenden Abschnitt 14a wird das Schutzrohr 14 an einer oberen Wand 24 des Gehäuses mit einem Rohrabschnitt 26 verbunden, an dem das Gasauslassventil 22 angebracht ist. Das Gasauslassventil 22 ist neben dem Rohrabschnitt 26 auch an einem Blechkörper 28 befestigt, um einen sicheren Betrieb, d.h. das Abführen des Gases und das Absperren des Gasauslassventils 20, zu gewährleisten.

In seinem dem Abschnitt 14a mit verkleinertem Durchmesser gegenüberliegenden Ende 14b stützt sich das Schutzrohr 14 an einem scheibenförmigen Wandabschnitt 30 ab. An den Wandabschnitt 30 schließt sich ein Raum 32 an, der mit dem Schutzrohr 14 atmosphärisch verbunden ist. Über den Raum 32 kann das Schutzrohr 14 mit einem vorbestimmten Gas versorgt oder mit Druck beaufschlagt werden.

An dem Schutzrohr 14 ist an seiner dem Gehäuse 12 zuwandten Außenseite 34 eine reflektierende Beschichtung (nicht dargestellt) vorgesehen, die die Wärmeabstrahlungen in Richtung des Gehäuses 12 vermindert und für ein homogenes Temperaturfeld innerhalb des Schutzrohres 14 und insbesondere im Bereich des Heizelementes 16 sorgt. Damit einhergehend wird aufgrund der reflektierenden Beschichtung des Schutzrohres 14 verhindert, dass sich das Gehäuse 12 stark erwärmt, wodurch sich neben der verbesserten Homogenität des Temperaturfeldes in dem Schutzrohr 14 das Verletzungsrisiko eines Bedieners durch Verbrennungen an dem Gehäuse 12 verringert.

Allgemein mit 36 sind in Figur 1 verschiedene Peripherieteile der Temperiervorrichtung 10 bezeichnet. Hier sind die Montageteile für die Verbindung zwischen Temperiervorrichtung und Analysegerät, elektrische Verbindungen zwischen Temperiervorrichtung und Analysegeräte sowie Vorrichtungen zur Kühlung des Schutzrohres 14 untergebracht.

Figur 2 zeigt eine perspektivische Ansicht der Temperiervorrichtung 10 gemäß Figur 1 mit einem in den Rohrabschnitt 18 bzw. in das Schutzrohr 14 eingeschobenen Probenträger 38.

Wie man aus Figur 2 erkennt, wird durch den Probenträger 38 eine auf einem Trägerabschnitt 40 des Probenträgers 38 befindliche Materialprobe zentral in dem Heizelement 16 platziert. Mit anderen Worten umgibt das Heizelement 16 den Trägerabschnitt 40, wodurch eine homogene Erwärmung einer Probe mit sehr hohen Heizraten ermöglicht wird.

Der Trägerabschnitt 40 des Probenträgers 38 kann mit unterschiedlich ausgebildeten Probenträger- bzw. Sensoranordnungen versehen werden, die jeweils auf die zu untersuchende Materialprobe abgestimmt werden können.

Zusammen mit dem Probenträger 38 wird ein Strahlungsschild 42 in den Rohrabschnitt 18 der Temperiervorrichtung 10 eingeschoben, um eine Wärmeabstrahlung in Richtung der unter der Temperiervorrichtung 10 befindlichen, hier nicht gezeigten, Analysevorrichtung zu verhindern und gleichzeitig ein möglichst homogenes Temperaturfeld in dem Schutzrohr 14 zu gewährleisten.

## Patentansprüche

1. Temperiervorrichtung (10) für thermo-analytische Untersuchungen, mit
- einem Gehäuse (12),
- wenigstens einem Heizelement (16),
- wenigstens einer in dem Gehäuse (12) angeordneten Schutzhülle (14), wobei die Schutzhülle (14) mit einer Gasversorgung verbindbar ist,
**dadurch gekennzeichnet, dass** das Heizelement (16) zumindest teilweise innerhalb der Schutzhülle (14) angeordnet ist, wobei die Schutzhülle (14) an ihrer dem Gehäuse (12) zugewandten Außenfläche (30) mit einer reflektierenden, metallischen Beschichtung versehen ist.

2. Temperiervorrichtung (10) nach Anspruch 1,
**dadurch gekennzeichnet, dass** die Schutzhülle (14) ein aus Keramik oder Glas hergestelltes Schutzrohr ist.

3. Temperiervorrichtung (10) nach Anspruch 1 oder 2,
**dadurch gekennzeichnet, dass** das Heizelement (16) zumindest teilweise aus Metall oder Keramik hergestellt ist.

4. Temperiervorrichtung (10) nach einem der Ansprüche 1 bis 3,
**dadurch gekennzeichnet, dass** das Schutzrohr (14) mittels einer Luftkühlung kühlbar ist, wobei dem Schutzrohr (14) fortlaufend Luft zuführbar ist.

5. Temperiervorrichtung (10) nach einem der Ansprüche 1 bis 4,
**dadurch gekennzeichnet, dass** die Temperiervorrichtung (10) Heizraten in einem Bereich von 0 K/min bis über 1000 K/min aufweist.

6. Temperiervorrichtung (10) nach einem der vorangehenden Ansprüche,
**dadurch gekennzeichnet, dass** die Temperiervorrichtung (10) wenigstens ein zumindest teilweise in der Schutzhülle angeordnetes Strahlenschutzschild aufweist.

7. Temperiervorrichtung (10) nach einem der vorangehenden Ansprüche,
**dadurch gekennzeichnet, dass** die Temperiervorrichtung (10) wenigstens einen zumindest teilweise in der Schutzhülle angeordneten Probenträger aufweist.

8. Temperiervorrichtung (10) nach einem der vorangehenden Ansprüche,
**dadurch gekennzeichnet, dass** die Temperiervorrichtung (10) wenigstens eine zumindest teilweise in der Schutzhülle angeordneten Sensoranordnung aufweist.

9. Analysevorrichtung mit einer Temperiervorrichtung (10) nach einem der Ansprüche 1 bis 8.

10. Analysevorrichtung nach Anspruch 9,
**dadurch gekennzeichnet, dass** die Temperiervorrichtung (10) abnehmbar und austauschbar an der Analysevorrichtung angebracht ist.

11. Analysevorrichtung nach einem der Ansprüche 9 oder 10,
**dadurch gekennzeichnet, dass** die Analysevorrichtung vakuumdicht ist.

12. Analysevorrichtung nach einem der Ansprüche 9 oder 10,
**dadurch gekennzeichnet, dass** die Analysevorrichtung zur Gasanalyse ausgelegt ist.

13. Analysevorrichtung nach einem der Ansprüche 9 oder 10,
**dadurch gekennzeichnet, dass** die Analysevorrichtung eine Thermowaage oder eine thermische Analysevorrichtung ist.

## Claims

1. A temperature control device (10) for thermoanalytical investigations, with
- a housing (12),
- at least one heating element (16),
- at least one protective envelope (14) arranged in the housing (12), wherein the protective envelope (14) can be connected with a gas supply,
**characterised in that** the heating element (16) is at least partially arranged within the protective envelope (14), wherein on its outer surface (30) facing the housing (12) the protective envelope (14) is provided with a reflecting, metallic coating.

2. The temperature control device (10) according to claim 1,
**characterised in that** the protective envelope (14) is a protective tube manufactured from ceramic or glass.

3. The temperature control device (10) according to claim 1 or 2,
**characterised in that** the heating element (16) is at least partially manufactured from metal or ceramic.

4. The temperature control device (10) according to any one of the claims 1 to 3,
**characterised in that** the protective tube (14) can be cooled by means of air cooling, wherein air can be continuously supplied to the protective tube (14).

5. The temperature control device (10) according to any one of the claims 1 to 4,
**characterised in that** the temperature control device (10) has heating rates in a range from 0 K/min to more than 1,000 K/min.

6. The temperature control device (10) according to any one of the preceding claims,
**characterised in that** the temperature control device (10) has a radiation protection shield arranged at least partially in the protective envelope.

7. The temperature control device (10) accordging to any one of the preceding claims,
**characterised in that** the temperature control device (10) has a sample carrier arranged at least partially in the protective envelope.

8. The temperature control device (10) according to any one of the preceding claims,
**characterised in that** the temperature control device (10) has a sensor arrangement arranged at least partially in the protective envelope.

9. An analysis device with a temperature control device (10) according to any one of the claims 1 to 8.

10. The analysis device according to claim 9,
**characterised in that** the temperature control device (10) is fitted in the analysis device such that it can be removed and replaced.

11. The analysis device according to any one of the claims 9 or 10,
**characterised in that** the analysis device is vacuum-tight.

12. The analysis device according to any one of the claims 9 or 10,
**characterised in that** the analysis device is designed for purposes of gas analysis.

13. The analysis device according to any one of the claims 9 or 10,
**characterised in that** the analysis device is a thermobalance or a thermal analysis device.

## Revendications

1. Dispositif thermorégulateur (10) pour des examens thermo-analytiques, avec
- un boîtier (12),
- au moins un élément chauffant (16),
- au moins une gaine de protection (14) disposée dans le boîtier (12), la gaine de protection (14) pouvant être reliée à une alimentation de gaz,
**caractérisé en ce que** l'élément chauffant (16) est disposé au moins en partie à l'intérieur de la gaine de protection (14), la gaine de protection (14) étant dotée sur sa surface extérieure (30) tournée vers le boîtier (12) d'un revêtement métallique réfléchissant.

2. Dispositif thermorégulateur (10) selon la revendication 1,
**caractérisé en ce que** la gaine de protection (14) est fabriquée en céramique ou en verre.

3. Dispositif thermorégulateur (10) selon la revendication 1 ou 2,
**caractérisé en ce que** l'élément chauffant (16) est fabriqué au moins en partie en métal ou en céramique.

4. Dispositif thermorégulateur (10) selon l'une quelconque des revendications 1 à 3,
**caractérisé en ce que** le tube de protection (14) peut être refroidi au moyen d'un refroidissement à air, de l'air pouvant être acheminé en continu au tube de protection (14).

5. Dispositif thermorégulateur (10) selon l'une quelconque des revendications 1 à 4,
**caractérisé en ce que** le dispositif thermorégulateur (10) comporte des vitesses de chauffe se situant dans une plage de 0 K/min jusqu'à plus de 1000 K/min.

6. Dispositif thermorégulateur (10) selon l'une quelconque des revendications précédentes,
**caractérisé en ce que** le dispositif thermorégulateur (10) comporte au moins un bouclier de protection contre les radiations disposé au moins en partie dans la gaine de protection.

7. Dispositif thermorégulateur (10) selon l'une quelconque des revendications précédentes,
**caractérisé en ce que** le dispositif thermorégulateur (10) comporte au moins un support d'échantillons disposé au moins en partie dans la gaine de protection.

8. Dispositif thermorégulateur (10) selon l'une quelconque des revendications précédentes,
**caractérisé en ce que** le dispositif thermorégulateur (10) comporte au moins un agencement de capteurs disposé au moins en partie dans la gaine de protection.

9. Dispositif d'analyse avec un dispositif thermorégulateur (10) selon l'une quelconque des revendications 1 à 8.

10. Dispositif d'analyse selon la revendication 9,
**caractérisé en ce que** le dispositif thermorégulateur (10) est monté de manière amovible et échangeable sur le dispositif d'analyse.

11. Dispositif d'analyse selon l'une quelconque des revendications 9 ou 10, **caractérisé en ce que** le dispositif d'analyse est conçu étanche au vide.

12. Dispositif d'analyse selon l'une quelconque des revendications 9 ou 10,
**caractérisé en ce que** le dispositif d'analyse est conçu pour l'analyse de gaz.

13. Dispositif d'analyse selon l'une quelconque des revendications 9 ou 10,
**caractérisé en ce que** le dispositif d'analyse est une thermobalance ou un dispositif d'analyse thermique.
